# DEMANDE DE BREVET EUROPEEN

(11) **EP 2 608 296 A1**
(43) Date de publication de la demande: **26.06.2013**
(21) Numéro de dépôt: 11194993.9
(22) Date de dépôt: 21.12.2011
(51) Int. Cl.: H01M 4/66, H01M 4/70, H01M 10/04

(54) **Collecteur de courant en métal amorphe**

(71) Demandeur: The Swatch Group Research and Development Ltd., 2074 Marin (CH)
(72) Inventeur: Stalder, Michael, 2503 Bienne (CH); Winkler, Yves, 3185 Schmitten (CH); Marlot Doerr, Agnès, 2000 Neuchâtel (CH)
(74) Mandataire: Ravenel, Thierry Gérard Louis

(57) **Abrégé**

La présente invention concerne un dispositif électrochimique comprenant une cathode et une anode séparées entre elles par un séparateur, la batterie comprenant en outre deux collecteurs de courant de sorte que l'anode et la cathode soient chacune disposée entre le séparateur et un collecteur de courant, caractérisé en ce qu'au moins un des deux collecteurs de courant sont réalisés en un matériau au moins partiellement amorphe comprenant au moins un élément métallique.

## Description

La présente invention concerne un dispositif électrochimique comprenant une cathode et une anode séparées entre elles par un séparateur, le dispositif électrochimique comprenant en outre deux collecteurs de courant de sorte que l'anode et la cathode soient chacune disposée entre le séparateur et un collecteur de courant. Ce dispositif peut être une batterie ou une pile.

### ARRIERE PLAN TECHNOLOGIQUE

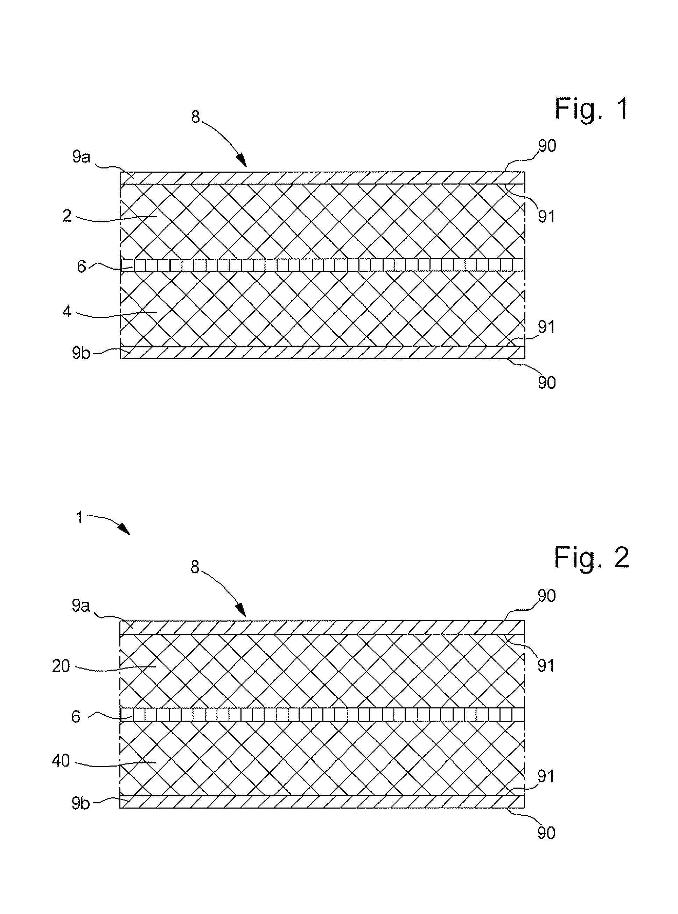

Parmi la multitude de types de batteries ou de piles existantes, il est connu des batteries appelées batterie en film. Ces batteries, visibles à la figure 1, comprennent une cathode et une anode séparées entre elles par un séparateur. La batterie comprend en outre deux collecteurs de courant qui transportent les électrons entre la cathode et l'anode et le circuit électrique externe à la batterie.

Une des applications de ces batteries, ou dispositifs électrochimiques, est l'obtention de batteries flexibles. Pour cela, les collecteurs de courant et le séparateur doivent être flexibles. Un des éléments limitant fortement la flexibilité des batteries en film est le collecteur de courant. Le collecteur de courant est l'élément de la batterie qui doit avoir la meilleure conductivité électrique, parce que la distance parcourue par le courant électrique y est de loin la plus grande (le long de toutes les dimensions de la batterie, alors que dans les autres éléments le courant emprunte seulement la dimension la plus courte, l'épaisseur). Une résistance trop élevée dans le collecteur de courant implique une perte de tension de la batterie et une dissipation de son énergie sous forme de chaleur. Pour cette raison, des métaux sont en général utilisés pour le collecteur de courant, puisqu'ils ont la meilleure conductivité électrique parmi les matériaux à température ambiante. Lorsque les collecteurs de courant ont la forme de feuilles métalliques et sont placés à l'extérieur de la batterie, comme sur la Fig. 1, ils font également office de couches barrières pour empêcher l'évaporation de l'électrolyte et l'entrée de gaz nocifs pour la batterie (selon le type de batterie p.ex. CO₂, O₂, H₂O,... )

Tandis que pour les autres éléments de la batterie, on peut utiliser des matériaux très flexibles comme des polymères ou des composites. Le fait d'utiliser une feuille métallique comme collecteur de courant a une influence négative sur la flexibilité de la batterie. De plus, le collecteur de courant se trouvant en général aux extrémités de la batterie, c'est de ce fait l'élément qui subit le stress de courbure le plus élevé, c'est-à-dire un stress en traction au rayon de courbure le plus élevé (extérieur), ainsi qu'en compression au rayon de courbure le plus faible, à l'intérieur. En conséquence, des fissures apparaissent dans les collecteurs de courant après une centaine de flexions à des rayons de courbure inférieurs à environ 1.5cm. Ces fissures s'accentuent avec un nombre croissant de flexions et forment des plis qui détériorent les couches actives à l'intérieur de la batterie. Ceci se traduit par une baisse de capacité qui s'accentue de plus en plus et se termine par la destruction de la batterie.

### RESUME DE L'INVENTION

L'invention concerne un dispositif électrochimique comme une batterie qui pallie les inconvénients susmentionnés de l'art antérieur en proposant une batterie flexible supportant plus de contraintes de flexion et plus fiable.

A cet effet, l'invention concerne une batterie comprenant une cathode et une anode séparées entre elles par un séparateur. La batterie comprend en outre un électrolyte et deux collecteurs de courant de sorte que l'anode et la cathode soient chacune disposée entre le séparateur et un collecteur de courant. La batterie se caractérise en ce que les collecteurs de courant sont réalisés en matériau métallique au moins partiellement amorphe.

Des modes de réalisation avantageux de cette batterie font l'objet des revendications dépendantes.

Dans un premier mode de réalisation avantageux, au moins un des deux collecteurs est réalisé en matériau totalement amorphe.

Dans un second mode de réalisation avantageux, ledit matériau comporte au moins un des éléments se trouvant dans la liste comprenant Ti, Zr, Ni, Cu, Fe, Cr, Mn, V, W, Al.

Dans un troisième mode de réalisation avantageux, ledit matériau a une résistivité maximale de 10⁻⁵ Ohm*m.

Dans un autre mode de réalisation avantageux, ledit matériau a une résistivité maximale de 10⁻⁶ Ohm*m.

Dans un autre mode de réalisation avantageux, ledit matériau comprend 47.5% en poids de Cuivre, 47.5% en poids de Zirconium et 5% en poids d'Aluminium.

Dans un autre mode de réalisation avantageux, les collecteurs de courant ont une épaisseur comprise entre 1µm et 50µm.

Dans un autre mode de réalisation avantageux, les collecteurs de courant ont une épaisseur comprise entre 5µm et 25µm.

Dans un autre mode de réalisation avantageux, les collecteurs de courant présentent une épaisseur inégale.

Dans un autre mode de réalisation avantageux, les bords des collecteurs de courant ont une épaisseur plus importante que la zone centrale desdits collecteurs.

Dans un autre mode de réalisation avantageux, au moins un des deux collecteurs de courant présente des structures sur sa face inférieure.

Dans un autre mode de réalisation avantageux, ledit matériau au moins partiellement amorphe comprenant au moins un élément métallique comprend en outre un élément cristallin.

Dans un autre mode de réalisation avantageux, au moins un des deux collecteurs de courant est réalisé par trempe sur roue.

Dans un autre mode de réalisation avantageux, au moins un des deux collecteurs de courant est réalisé par électrolyse.

Dans un autre mode de réalisation avantageux, ledit dispositif est une pile ou une batterie.

Dans un autre mode de réalisation avantageux, la pile ou la batterie est rechargeable.

Un avantage de la batterie selon la présente invention est qu'elle possède des caractéristiques élastiques plus intéressantes. En effet, dans le cas d'un matériau amorphe, le rapport σₑ/E est augmenté par élévation de la limite élastique σₑ (E étant le module de Young). Ainsi, le matériau voit donc la contrainte, au-delà de laquelle il ne reprend pas sa forme initiale, augmenter. Cette amélioration du rapport σₑ/E permet alors une déformation plus importante. Cela permet alors à la batterie de subir des contraintes de flexion plus importantes et à une fréquence plus importante.

### BREVE DESCRIPTION DES FIGURES

Les buts, avantages et caractéristiques du dispositif électrochimique selon la présente invention apparaîtront plus clairement dans la description détaillée suivante d'au moins une forme de réalisation de l'invention donnée uniquement à titre d'exemple non limitatif et illustrée par les dessins annexés sur lesquels :
- les figures 1 à 3 représentent de manière schématique une vue en coupe du principe d'une batterie ;
- la figure 4 représente de manière schématique une vue en coupe d'une première variante de la batterie selon la présente invention ;
- la figure 5 représente de manière schématique une vue en coupe d'une alternative à la première variante de la batterie selon la présente invention ; et
- la figure 6 représente de manière schématique une vue en coupe d'une seconde variante de la batterie selon la présente invention ;
- la figure 7 représente de manière schématique une vue en coupe d'une troisième variante de la batterie selon la présente invention ;
- la figure 8 représente de manière schématique un procédé de fabrication d'un collecteur de courant de la batterie selon la présente invention ;
- la figure 9 représente de manière schématique une vue en coupe d'une cinquième variante de la batterie selon la présente invention.

### DESCRIPTION DETAILLEE

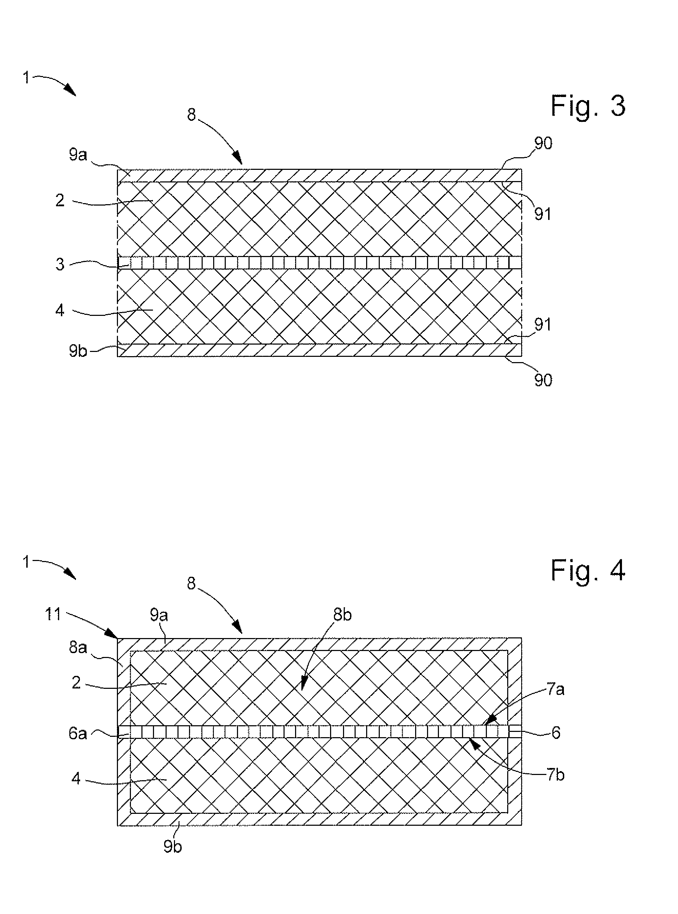

La figure 1 montre un dispositif électrochimique 1 selon l'invention. Ce dispositif électrochimique 1 comprend une cathode 2 et une anode 4 séparées entre elles par un séparateur 6. La batterie comprend en outre deux collecteurs de courant 8 de sorte que l'anode 4 et la cathode 2 soient chacune disposée entre le séparateur 6 et un collecteur de courant 8. On a donc un collecteur de courant d'anode 9b et un collecteur de courant de cathode 9a. Chaque collecteur de courant possède une face inférieure 91 et une face supérieure 90. Le séparateur 6 est généralement réalisé en polymères ou composites. Le dispositif électrochimique 1 comprend en outre un électrolyte pour l'échange d'ions entre la cathode 2 et l'anode 4. Cet électrolyte peut être, comme sur la figure 1, directement intégré au séparateur 6, ce dernier étant un séparateur 6 poreux dont les pores sont remplis d'électrolyte liquide ou gélifié. Lorsque l'anode 20 et la cathode 40 sont poreuses comme visible à la figure 2, l'électrolyte remplit également ces pores. Il est également possible que cet électrolyte soit constitué d'une couche entièrement solide 3 qui remplace alors le séparateur comme visible à la figure 3.

Ce dispositif électrochimique 1 peut être utilisé pour différentes applications comme par exemple une application horlogère ou une application dans une carte à puce ou dans la téléphonie. Ce dispositif électrochimique 1 peut être une batterie ou une pile, cette batterie ou cette pile peut être rechargeable ou non rechargeable. Les termes dispositif électrochimique ou batterie ou pile peuvent être utilisés pour nommer la présente invention.

Si on veut réaliser un dispositif électrochimique 1 en film flexible tout en évitant l'apparition de telles fissures dans le collecteur de courant 8, même après un grand nombre de flexions, il faut d'une part rester dans le domaine de déformation élastique du matériau et d'autre part que ce matériau présente une bonne résistance à la fatigue dans la zone de sollicitation. De manière générale et pour un alliage donné, le nombre de cycles avant une rupture par fatigue augmente très fortement lorsque la contrainte de sollicitation s'éloigne de la limite élastique. En-dessous d'une certaine contrainte, la rupture par fatigue disparaît. Ce comportement est généralement représenté par la courbe dite de Wöhler.

La présente invention consiste à utiliser des collecteurs de courant 8 en métal amorphe. Les métaux amorphes (ou verres métalliques), qui sont en général des alliages plutôt que des métaux purs, ont une déformation élastique environ 2 à 4 fois plus élevée que les métaux cristallins.

Avantageusement, les collecteurs de courant 8 sont réalisés en un matériau au moins partiellement amorphe. On comprendra par matériau au moins partiellement amorphe que le matériau est apte, pour les épaisseurs nécessaires à l'application visée, à solidifier au moins partiellement en phase amorphe.

Pour les applications pour lesquelles les dispositifs électrochimiques en films selon la présente invention sont utilisés, une épaisseur totale du dispositif électrochimique 1 est généralement de 0.4 mm. Les collecteurs de courant 8 de ce dispositif électrochimique 1 ont une épaisseur pouvant varier de 1 à 50 µm. Préférentiellement, l'épaisseur sera comprise entre 5 et 25 µm.

En effet, l'avantage de ces alliages métalliques amorphes vient du fait que, lors de leur fabrication, les atomes composant ces matériaux amorphes ne s'arrangent pas selon une structure particulière comme c'est le cas pour les matériaux cristallins. Ainsi, même si le module d'Young E d'un métal cristallin et celui d'un métal amorphe sont proches, la limite élastique σₑ est différente. Un métal amorphe se différencie alors par une limite élastique σ_{eA} plus élevée que celle σ_{eC} du métal cristallin d'un facteur sensiblement allant de deux à quatre. Cela permet aux métaux amorphes de pouvoir subir une plus forte contrainte avant d'arriver à la limite élastique σₑ.

De plus, vu que le rayon de courbure minimal est inversement proportionnel à la déformation maximale admissible, ceci implique qu'un rayon de courbure au moins deux fois plus faible est possible en utilisant un métal amorphe, en lieu et place d'un métal cristallin comme c'est le cas dans l'état de l'art. De plus, pour un rayon de courbure identique à celui d'un métal cristallin, les risques de rupture en fatigue diminuent puisque la limite élastique d'un métal amorphe est généralement 2-4 fois supérieure à celle d'un métal cristallin de composition chimique semblable. En effet, la sollicitation cyclique relative sera significativement plus faible pour le métal amorphe et donc le nombre de cycles avant rupture considérablement augmenté.

Afin de pouvoir être utilisé comme collecteur de courant 8, un matériau doit être stable à l'intérieur de la fenêtre des potentiels électrochimiques de l'électrode, qui se trouve entre les potentiels à l'état chargé et à l'état déchargé de l'électrode, de manière à éviter une corrosion du collecteur de courant. De même, le matériau du collecteur de courant 8 ne doit pas réagir chimiquement avec les substances constituant les électrodes et l'électrolyte 3. La stabilité du collecteur de courant 8 peut être thermodynamique, cinétique ou avoir lieu par passivation. La résistivité électrique du collecteur de courant 8 ne doit pas être trop élevée pour ne pas affecter la puissance et l'efficacité du dispositif électrochimique 1. Typiquement, la résistivité de l'alliage utilisé comme collecteur 8 ne devrait pas dépasser 10⁻⁵ Ohm*m, mais plus préférentiellement 10⁻⁶ Ohm*m.

Il en résulte que les alliages amorphes constitués des éléments chimiques suivant présentent un intérêt particulier pour cette application : Ti, Zr, Ni, Cu, Fe, Cr, Mn, V, W, Al. Un exemple d'alliage amorphe utilisable pour cette application est le Cu_{47.5}Zr_{47.5}Al₅. Sa bonne conductivité électrique couplée à ses propriétés mécaniques élevées (σₑ~1600MPa ; E~87GPa; εₑ~2%) en font un candidat particulièrement intéressant.

On peut également imaginer utiliser des composites ayant une matrice en métal amorphe et une seconde phase très conductrice (cuivre pur par exemple) pour encore augmenter la conductivité électrique.

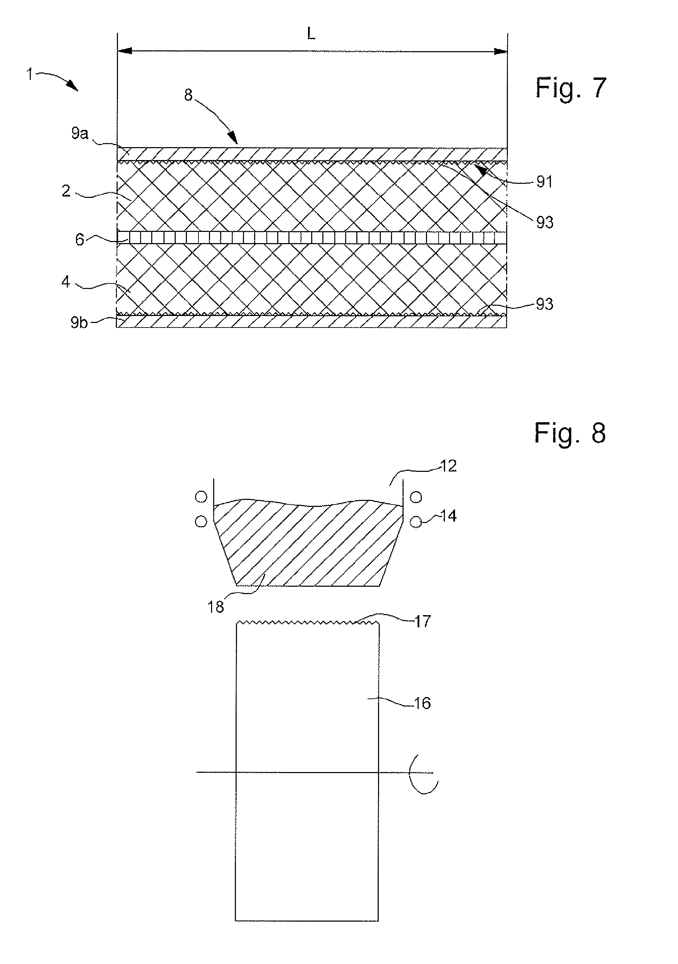

Pour la réalisation des collecteurs de courant 8, la méthode de trempe sur roue (ou melt-spinning en langue anglaise) est utilisée. Cette méthode, visible à la figure 8, consiste, dans son principe, a se munir d'un réservoir 12 de liquide chaud 18 (métal fondu par exemple) chauffé par un système de chauffage 14, éventuellement sous pression, duquel coule un filet qui entre en contact lors de sa chute avec un cylindre 16 en métal bon conducteur thermique (en cuivre par exemple). Cette roue tourne à grande vitesse et est elle-même refroidie, généralement par contact avec un autre fluide froid, azote liquide ou eau, ce qui lui permet de rester froide. La mise sous pression du réservoir permet l'éjection du liquide. Le liquide est refroidi au contact de la roue et peut former un ruban solide de plus ou moins faible épaisseur. Le réglage de l'épaisseur se fait en agissant sur le débit de métal liquide ou sur la vitesse de rotation du cylindre en métal bon conducteur thermique.

Une autre méthode pour la réalisation des collecteurs de courant 8 est la déposition par électrolyse. Cette méthode est basée sur le principe de la déposition d'un métal ou alliage métallique sous l'effet d'un courant sur un support lui-même conducteur électrique.

Dans cette méthode, deux électrodes sont plongées dans un bain contenant les cations du métal ou des métaux à déposer. Par application d'un courant ou d'une différence de potentiel entre les deux électrodes les cations métalliques désirés sont déposés sur la cathode faisant office de support. Après fabrication, le métal ou alliage formé peut être isolé de la cathode par des moyens physiques ou chimiques.

Pour régler l'épaisseur du collecteur de courant 8, la durée de l'électrolyse est ajustée de sorte que plus la durée est importante et plus importante est la quantité de matériau déposé.

Si le matériau déposé est un alliage, plusieurs cations métalliques sont contenus dans le bain. La composition de l'alliage qui formera le collecteur de courant 8 peut être modulée par ajustement des paramètres de courant, de température et de composition du bain. Les propriétés de ductilité du matériau peuvent être améliorées ou modifiées grâce à l'utilisation de courants pulsés.

Lorsque cette méthode est appliquée en milieu aqueux et à des températures faibles par rapport aux méthodes de fabrication métallurgiques ou physiques, cette méthode aboutit à la formation de métaux à l'état amorphe.

Dans une première variante de construction du dispositif électrochimique 1 selon la présente invention et visible à la figure 4, le dispositif électrochimique 1 est fermé par les collecteurs de courant 8. On entend par là que les collecteurs de courant 8 forment une structure 11. Pour cela, chaque collecteur de courant 8 se présente sous la forme d'une plaque lisse, par exemple rectangulaire, comprenant un rebord périphérique 8a. Ce rebord périphérique 8a permet alors de définir un logement 8b dans lequel le matériau servant d'anode 4 ou de cathode 2 est placé. Ces deux collecteurs 8 sont alors séparés par le séparateur 6. Ce séparateur 6 comprend une première face 7a et une seconde face 7b. Le tout est assemblé de sorte que le rebord périphérique 8a du collecteur d'anode 9b soit soudé sur la première face 7a du séparateur 6 et que le rebord périphérique 8a du collecteur de cathode 9a soit soudé sur la seconde face 7b du séparateur 6 comme visible à la figure 4. Les soudures sont réalisées de préférence aux extrémités 6a du séparateur 6.

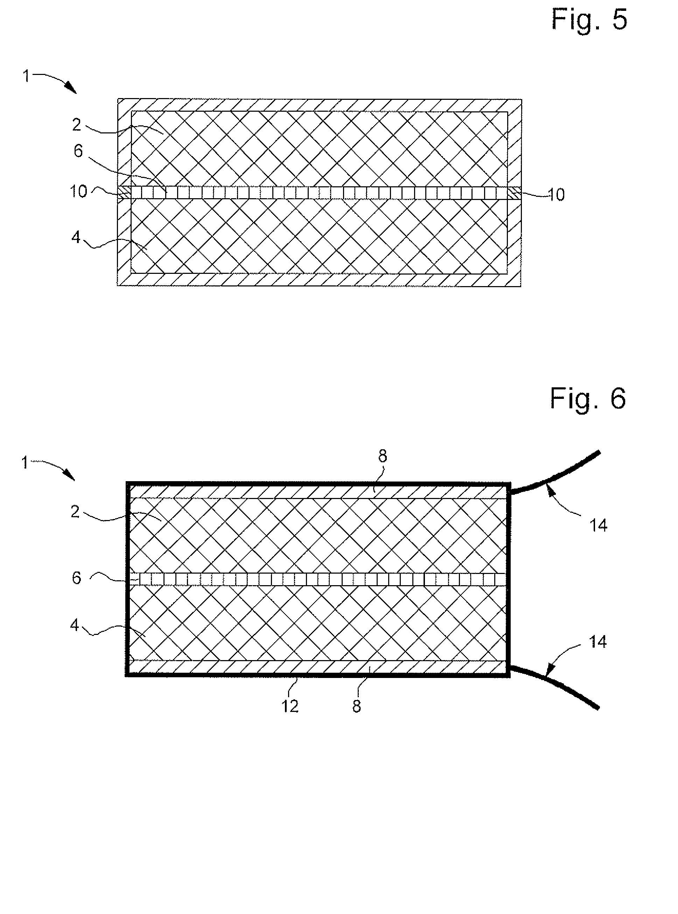

Dans une alternative, visible à la figure 5, à cette première variante , le séparateur 6 ne permet pas le soudage des collecteurs de courant 8. La batterie 1 comprend donc un joint 10 solidaire du séparateur et sur lequel le rebord périphérique 8a du collecteur d'anode 9b et le rebord périphérique 8a du collecteur de cathode 9a sont soudés.

Dans une seconde variante visible à la figure 6, les collecteurs de courant 8 ne sont qu'une simple feuille lisse réalisée en métal amorphe. Le matériau d'anode 4 est disposé entre le séparateur 6 et le collecteur d'anode 9b alors que le matériau de cathode 2 est disposé entre le séparateur 6 et le collecteur de cathode 9a. Astucieusement, cette variante enferme le dispositif électrochimique 1 ainsi disposé avec une couche 12 de résine ou dans un sachet en laminat polyéthylène / aluminium / polyéthylène qui est mis sous vide. Des languettes conductrices 14 sont alors fixées préalablement aux collecteurs 8 pour réaliser les contacts de la batterie.

Dans une troisième variante de l'invention visible à la figure 7, il est envisageable que les collecteurs 8 aient leur face inférieure 91 structurée. En effet, comme le dispositif électrochimique 1 est susceptible de subir des flexions, des forces de cisaillement peuvent apparaîtrent entre le collecteur de courant 8 et l'électrolyte formant la cathode 2 ou l'anode 4. Si ces forces de cisaillement sont trop importantes, la batterie 1 risque de se délaminer.

Or, en structurant la face inférieure 91 de chaque collecteur de courant 8, on augmente les forces de frottement entre le collecteur de courant 8 et l'électrolyte formant la cathode 2 ou l'anode 4. De ce fait, lors d'une torsion, la force d'accroche supplémentaire fournie par les structures permet de repousser la limite de délamination.

Pour que cette accroche soit efficace, il faut que les structures 93 soient disposées de sorte que l'accroche soit améliorée. Soit l'exemple d'un dispositif électrochimique 1 en film de forme rectangulaire. Dans le cas d'une flexion selon un axe parallèle à la largeur du dispositif électrochimique 1, les structures doivent être agencées dans le même sens c'est-à-dire de façon parallèle à la largeur de la batterie 1. Au contraire, dans le cas d'une flexion selon un axe parallèle à la longueur du dispositif électrochimique 1, les structures 93 doivent être agencées dans le même sens c'est-à-dire de façon parallèle à la longueur du dispositif électrochimique 1.

Néanmoins, il peut être envisagé que les faces inférieures 91 de chaque collecteur de courant 8 sont structurées dans le sens de la longueur et dans le sens de la largeur. Cet agencement permet à la batterie 1 film de subir des flexions en longueur ou en largeur.

Pour réaliser de telles structures 93, il est possible d'utiliser des méthodes différentes. Une première solution consiste à réaliser directement les structures lors de la fabrication du collecteur de courant 8 c'est-à-dire lors de l'étape de trempe sur roue comme visible sur la figure 8. Pour cela, le cylindre sur lequel le métal fondu est envoyé pour former le ruban, est directement structuré. On comprend que le cylindre 16 présente à sa surface le négatif 17 des structures 93 devant être faites sur le collecteur de courant 8. Par conséquent, lors de cette étape de trempe sur roue, le métal liquide se solidifie sous forme amorphe directement avec la forme du négatif du cylindre 16.

Une autre solution consiste à utiliser le principe du formage à chaud. Ce procédé consiste à placer le collecteur de courant 8, entre deux matrices, à le chauffer dans une gamme de température comprise entre la température de transition vitreuse Tg et la température de cristallisation Tx tout en le pressant durant un temps déterminé pour conserver une structure totalement ou partiellement amorphe. Ceci est fait dans le but de conserver les propriétés élastiques caractéristiques des métaux amorphes. Une fois le pressage terminé, le collecteur de courant 8 est refroidi rapidement afin de garder l'état amorphe. Ce mode de mise en forme permet de reproduire très précisément des géométries fines car, entre Tg et Tx, la viscosité de l'alliage diminue fortement, ce dernier épousant ainsi tous les détails des matrices sans perdre son état amorphe.

Pour réaliser de telles structures 93, il est également possible de former directement le collecteur de courant 8 lors de sa fabrication par électrolyse, en choisissant une cathode support elle-même structurée. L'un des aspects de la déposition sous courant est que cette méthode peut permettre de répliquer avec une grande précision divers aspects de surface y compris complexes comme ceux décrits pour les besoins de la présente invention.

Dans une quatrième variante, il est envisageable que la batterie en film 1 soit pré-fléchie. On entend par là que le dispositif électrochimique 1 en film présente naturellement une courbure. En effet, il est possible que le dispositif électrochimique 1 puisse être placé dans un endroit non linéaire comme un bracelet de montre ou que la batterie doive être pliée pour être intégrée dans l'appareil ou l'objet auquel elle est destinée. Il est donc avantageux que ce dispositif électrochimique 1 puisse présenter naturellement une forme non linéaire de sorte que son intégration soit simplifiée. Cela permet également de ne pas devoir déformer élastiquement ou plastiquement le dispositif électrochimique 1 en film et, de ce fait, de ne pas le fragiliser.

Pour réaliser un tel dispositif électrochimique 1 la technique de formage à chaud est utilisée. En effet, chaque collecteur de courant 8 est placé entre deux matrices puis est chauffé à une température comprise entre la température de transition vitreuse Tg et la température de cristallisation Tx. Le métal amorphe voit alors sa viscosité augmenter sans perdre sa caractéristique amorphe. Le collecteur de courant 8 est alors pressé par les deux matrices, ces dernières présentant un profil courbé de sorte qu'une des matrices a un profil convexe et une des matrices a un profil concave. L'étape de refroidissement rapide permet de conserver l'état amorphe et de solidifier le collecteur de courant 8. Bien entendu, le profil des matrices est calculé pour obtenir la courbure désirée.

Dans le même but, le collecteur de courant 8 pré-fléchi peut être formé directement lors de sa fabrication par électrolyse en utilisant une cathode-support qui présente l'élément de courbure désiré.

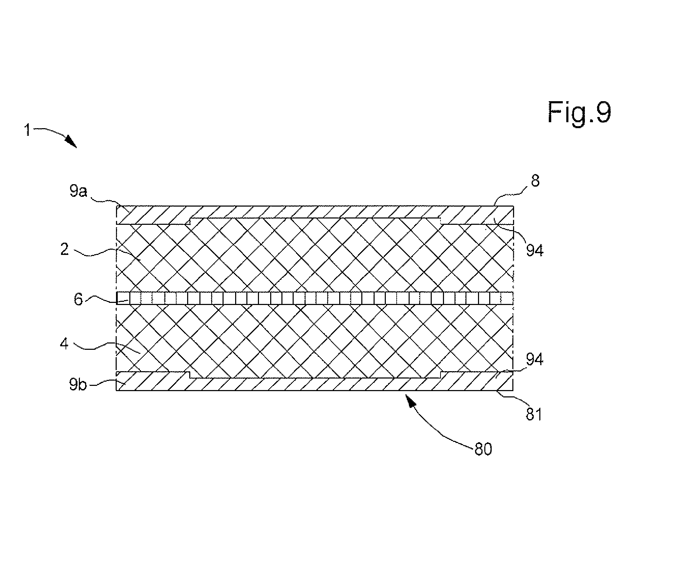

Dans une cinquième variante visible à la figure 9, il est envisageable que les collecteurs de courant 8 présentent une déformation non uniforme. Pour cela, chaque collecteur 8 présente une épaisseur variable 94 ou inégale. En effet, pour une contrainte définie, la déformation du collecteur de courant 8 sera différente selon l'épaisseur de celui-ci. On comprendra alors qu'un collecteur de courant 8 d'épaisseur définie se déformera plus qu'un collecteur de courant 8 ayant une épaisseur deux fois plus importante. Avoir un collecteur de courant 8 avec une épaisseur variable 94 permet de configurer ledit collecteur de courant 8 de sorte que la déformation des zones où l'épaisseur est plus importante soit moindre que la déformation des zones où l'épaisseur est plus faible. Particulièrement, il est avantageux que les zones périphériques 81 du collecteur de courant 8 soient plus épaisses que la zone centrale 80. Effectivement, la zone centrale 80 est généralement la zone devant subir la déformation la plus importante. Cette zone centrale 80 doit, par conséquent, pouvoir se déformer facilement afin de ne pas se déformer plastiquement trop rapidement. Au contraire, les bords 81 du collecteur de courant 8 sont peu soumis à des contraintes et des déformations. Il est donc envisageable que l'épaisseur de ces bords soient différentes et en particulier plus importante.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

Il peut être ainsi prévu, dans la première variante de construction, que les collecteurs 8 soient solidarisés par formage à chaud.

## Revendications

1. Dispositif électrochimique comprenant une cathode (2, 20) et une anode (4, 40) séparées entre elles par un séparateur (6, 60), ledit dispositif électrochimique comprenant en outre un électrolyte (3) et deux collecteurs de courant (8) de sorte que l'anode et la cathode soient chacune disposée entre le séparateur et un collecteur de courant, **caractérisé en ce qu'**au moins un des deux collecteurs de courant soit réalisé en un matériau au moins partiellement amorphe comprenant au moins un élément métallique.

2. Dispositif électrochimique selon la revendication 1, **caractérisé en ce qu'**au moins un des deux collecteurs (8) est réalisé en un matériau totalement amorphe.

3. Dispositif électrochimique selon l'une des revendications précédentes, **caractérisé en ce que** ledit matériau comporte au moins un des éléments se trouvant dans la liste comprenant Ti, Zr, Ni, Cu, Fe, Cr, Mn, V, W, Al.

4. Dispositif électrochimique selon l'une des revendications précédentes, **caractérisé en ce que** ledit matériau a une résistivité maximale de 10⁻⁵ Ohm*m.

5. Dispositif électrochimique selon l'une des revendications 1 à 3, **caractérisé en ce que** ledit matériau a une résistivité maximale de 10⁻⁶ Ohm*m.

6. Dispositif électrochimique selon l'une des revendications précédentes, **caractérisé en ce que** ledit matériau comprend 47.5% en poids de Cuivre, 47.5% en poids de Zirconium et 5% en poids d'Aluminium.

7. Dispositif électrochimique selon l'une des revendications précédentes, **caractérisé en ce que** les collecteurs de courants (8) ont une épaisseur comprise entre 1µm et 50µm.

8. Dispositif électrochimique selon l'une des revendications 1 à 6, **caractérisé en ce que** les collecteurs de courants (8) ont une épaisseur comprise entre 5µm et 25µm.

9. Dispositif électrochimique selon l'une des revendications précédentes, **caractérisé en ce que** les collecteurs de courants (8) présentent une épaisseur inégale.

10. Dispositif électrochimique selon la revendication 9, **caractérisé en ce que** les bords (81) des collecteurs de courant (8) ont une épaisseur plus importante que la zone centrale (80) desdits collecteurs.

11. Dispositif électrochimique selon l'une des revendications précédentes, **caractérisé en ce que** ledit au moins un des deux collecteurs (8) de courant présente des structures (93) sur sa face inférieure (91).

12. Dispositif électrochimique selon l'une des revendications précédentes, caractérisé en ce ledit matériau au moins partiellement amorphe comprenant au moins un élément métallique comprend en outre un élément cristallin.

13. Dispositif électrochimique selon l'une des revendications précédentes, **caractérisé en ce qu'**au moins un des deux collecteurs de courant (8) est réalisé par trempe sur roue.

14. Dispositif électrochimique selon l'une des revendications 1 à 12, **caractérisé en ce qu'**au moins un des deux collecteurs (8) est réalisé par électrolyse.

15. Dispositif électrochimique selon l'une des revendications précédentes, caractérisé en ce ledit dispositif est une pile ou une batterie.

16. Dispositif électrochimique selon la revendication 15, **caractérisé en ce que** la pile ou la batterie est rechargeable.
